# EUROPEAN PATENT APPLICATION

(11) **EP 1 056 044 A1**
(43) Date of publication of application: **29.11.2000**
(21) Application number: 00420073.9
(22) Date of filing: 13.04.2000
(51) Int. Cl.: G06T 3/00

(54) **Image transformation device enabling local modification of images**

(30) Priority: 18.05.1999 FR 9906437
(71) Applicant: EASTMAN KODAK COMPANY, Rochester, New York 14650-2201 (US)
(72) Inventor: Philiponet, Etienne Pierre, 71102 Chalon sur Saone Cédex (FR); Vandroux, Jean-Philippe, 71102 Chalon sur Saone Cédex (FR)
(74) Representative: Buff, Michel

(57) **Abstract**

The invention relates to image transformation.

The device according to the invention comprises a computer 10 provided with a memory, a processing unit, and a control means 14 to supply, to the processing unit, a control signal enabling the activation of an image transformation algorithm contained in the memory and to change the information of the digital file representative of the image in order to supply a modified file that can be shown on a display device 12. The device is characterized in that the control means comprises a plurality of sensors 20, 22, 24, 26, each associated with a set zone of the image in such a way as to locally modify, in the set zone, the image supplied by the digital file according to the signal generated by the sensor and the algorithm selected from among the plurality of available algorithms.

## Description

The present invention relates to the transformation of images and especially to a transformation device wherein users see in real time the modifications made to an image by their action.

The principle of diverting people with distorted images has been used for a long time and applied by distorting mirrors. This application requires large sized mirrors, each mirror only providing one type of distortion.

It is common in electronic imaging to want to transform an image or part of an image, either by changing the colors, or by changing the shapes and outlines of the objects contained in the image or in any other way. Digital image processing programs are commercially available in which, by means of a given interface, the user selects a type of transformation and then determines the degree of transformation to apply to the image or part of the image. This type of functioning requires knowledge of how to operate the program and about the possible transformations.

The French Patent Application 9812403 filed September 30 1998 describes a device enabling transformation in real time of an image supplied by a camera by means of image transformation algorithms and signals coming from an interface.

The invention aims to enable local transformation of an image according to a set algorithm selected according to an application criteria.

The image transformation device according to the invention enables modified images to be obtained. This device comprises: a) a computer including: 1) a memory to hold a digital file, representative of an image, and a plurality of image transformation algorithms, 2) a processing unit able to use at least one algorithm from among the plurality of image transformation algorithms, and, 3) a control means to supply, to the processing unit, a control signal in order to activate one of the image transformation algorithms and change the data in the digital file representative of the image and supply a modified file that can be displayed; and b) a display device controlled by the computer to display the image of the modified digital file. This device is characterized in that the control means comprises a plurality of sensors, each able to generate a signal having several levels, and in that each sensor is associated with a set zone of the image in order to modify locally, in the set zone, the image supplied by the digital file according to the signal generated by the respective sensor and the algorithm selected from among the plurality of algorithms available.

Other characteristics and advantages of the invention will appear on reading the description that follows making, solely as a non exclusive example, reference to the drawings wherein the same digital references have been used to indicate analog items.

Figure 1 represents diagrammatically one embodiment of the invention.

Figure 2 represents diagrammatically the operations performed when the invention is used in a set type of application.

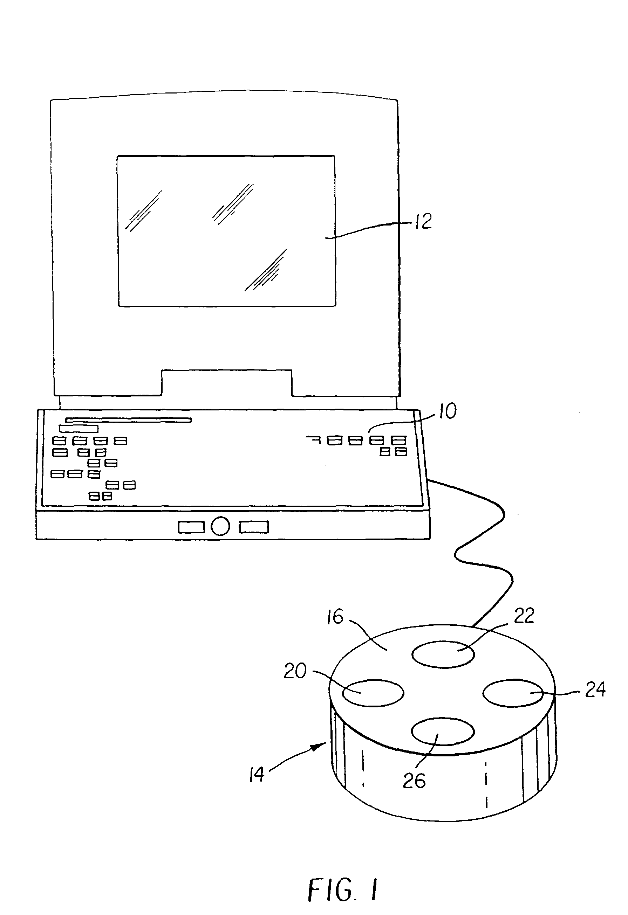

As can be seen in Figure 1, the image transformation device comprises a computer 10 configured to be able to process images. This computer for example can be a PC or other type. It comprises a memory, not shown, able to hold a digital file representative of an image that is desired to be modified. This digital file can be supplied to the computer by any device known to those skilled in the art such as for example a digital camera, a video camera, a scanner able to transform an image into a digital file, or a diskette containing a file representative of the image that is desired to be modified. The memory can also hold one or more image transformation algorithms usually supplied in the form of a compact disk (CD) containing appropriate programs.

The computer 10, by means of a processing unit, applies at least one image transformation algorithm to the data contained in the digital file in order to transform these data. The choice of algorithm used and the amount of the transformation are controlled by a control means 14 that supplies a control signal to the processing unit; these items will be described in more detail below.

After transformation of the data contained in the digital file, the modified data is sent to a display device 12 so that the transformed image can be viewed.

The control means 14 comprises many sensors 20, 22, 24, 26. According to the invention, a set zone of the image is made to correspond to each sensor. In a preferred embodiment, the sensors are pressure sensors sold by the company, Radiospares™ with the reference IEE FSR 151. This type of sensor, associated with an appropriate circuit, supplies a signal whose amplitude is a function of the pressure exerted. It is possible to use other pressure sensors or other types of sensors, for example with variable induction or with variable capacitance, or heat or infrared detectors.

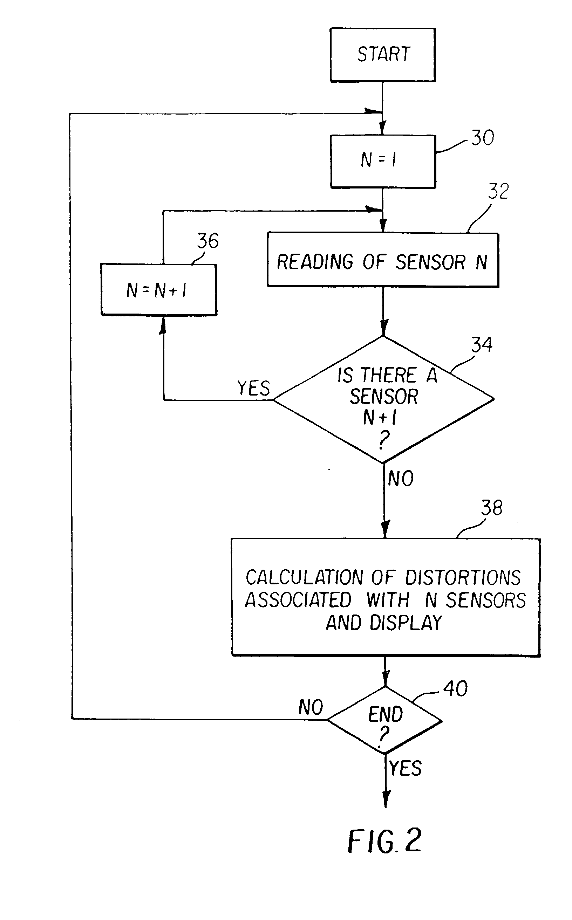

Figure 2 represents diagrammatically the operation of the computer when using the image transformation device according to the invention. When the invention is used, the computer 10 initializes at 30 a counter to the unit value. An order number is allocated to each sensor 20 - 26. For example, in the embodiment shown, the value 1 is allocated to sensor 20, the value 2 to sensor 22, the value 3 to sensor 24 and the value 4 to sensor 26. After the counter is initialized, the computer, at 32, records the signal supplied by the sensor corresponding to the order number which, at the time of the first loop, equals 1. At 34, the computer tests the number of sensors read in relation to the number of available sensors to determine if it is necessary to acquire the supplementary values corresponding to the sensors whose data has not yet been received by going through the "yes" loop; in the contrary case, "no", operation 38 is reached. When the "yes" loop is used, at 36, the counter value is incremented by one unit and operation 32 is returned to. When operation 38 has been reached, the computer 10 calculates the modifications to make to the image according to the signals associated with each sensor and then shows the resulting image on the display device 12. After the display at 38, the computer 10 at 40 tests whether there has been any activation of the various sensors. When there has been no activation, the computer 10 stops the operation by leaving through the "yes" response. If at least one of the sensors has been activated, the computer returns to the start, through the "no" loop, to take into account the modifications that have taken place on the sensors.

Various types of operation of a device according to the invention will now be described. In a first type of operation, the image that is required to be transformed is an image of a face. In this type of operation, each sensor is associated with a different zone of the image. For example, sensor 20 is associated with the eyes, sensor 22 is associated with the nose, sensor 24 is associated with the mouth and sensor 26 is associated with the whole zone corresponding to the face. As will be seen, the zones associated with each sensor can be separate or cover one another in whole or in part. In the embodiment produced for this type of operation, the sensors are arranged side by side on a flat support 16. Clearly the support 16 can receive a diagrammatic image representing the image to be distorted, for example a face, and the sensors can be arranged in the respective zones that they are able to modify. In this embodiment, each sensor can be activated individually and independently from the others. For example activating sensor 20 can, in one type of operation, increase the size of the eyes with a first transformation algorithm or increase the size of one of the eyes and reduce the size of the other with a second algorithm. It can be arranged that sensor 26 associated with the whole head transforms it after having applied the distortions coming from the other sensors. Clearly various transformation algorithms can be associated with each sensor and switching between the algorithms can either be random after a set time or caused for example by the signal coming from the sensor achieving preset conditions. These conditions can be simple (for example exceeding a threshold) or complex (for example the signal must first take a value greater than a high threshold followed by a value lower than a low threshold).

Other transformations (or the same) can be used at the same time on the other sensors to act on the data contained in the image file and distort the image shown on the display screen at will. According to the type of transformations provided, the modifications caused by the computer 10 will be applied directly to the source image file or to the temporary files coming from prior transformation, the order of the transformations having been previously determined.

In another type of operation, the signals coming from the sensors can be used to scroll the items contained in a database. In this type of operation, first the image that is desired to be transformed is shown on a display screen 12. For example, when the application is intended to present a range of lipsticks, one of the sensors is associated with the lips of the face shown on the screen. First, the processing unit 10, determines the location of the lips. This can be done automatically for example by image texture recognition after having indicated, using a pointer, the lip zone. Then, one color of the available range is associated with the signal value coming from the sensor.

Clearly the processing unit can be programmed to modify step-by-step the colors displayed on the zone of the image corresponding to the lips. This can be done by using sensors supplying a binary output signal. For example pressure greater than a preset threshold will supply a logic 1 signal and pressure lower than or equal to this threshold will supply a logic 0 signal. In this case, it will be useful to provide an action in order to scroll the items of the database in one direction then to scroll them in the reverse direction. This type of operation can be achieved for example either by a short action to obtain the first direction, and a longer action for the second direction of scrolling the database items, or at least two sensors, each one associated with a set direction.

Another modification can also be simultaneous or not. For example, the addition of a pair of glasses to the face displayed on the screen. In this case, the processing unit must determine the location of the eyes and where the ears attach. Then various types of frames will be scrolled, whose dimensions are automatically adapted to the dimensions of the displayed face. Clearly, other types of modification can be contemplated, for example the presentation, simultaneous or not, of various hair styles and hair colors, the production of robot portraits, etc. Various sensors are used to scroll the database items corresponding to various parts of the face; the processing unit enabling the outlines of an item to be adapted to the part of the face next to it.

In another application, the displayed image is a "pseudo-relief" image obtained for example in the manner described in the French Patent Application 9814178 filed November 6, 1998. In this embodiment, the sensors are arranged on a model of the head in three dimensions. Each sensor is arranged in one zone of the model corresponding to the local modification zone of the image shown on the display device and modified by this sensor.

## Claims

1. An image transformation device for obtaining modified images, comprising:
a) a computer (10) comprising:
i) a memory to hold a digital file representative of an image and a plurality of image transformation algorithms,
ii) a processing unit able to use at least one algorithm of the plurality of image transformation algorithms, and
iii) a control means (14) to supply, to the processing unit, a control signal in order to activate one of the image transformation algorithms and modify the data of the digital file representative of the image and supply a modified file that can be displayed; and
b) a display device (12) linked to the computer to display the modified image coming from the digital file;
characterized in that:
the control means (14) comprises a plurality of sensors (20, 22, 24, 26), each able to generate a signal having several levels, each sensor being associated with a set zone of the image in order to locally modify, in the set zone, the image supplied by the digital file according to the signal generated by the respective sensor and the algorithm selected from among the plurality of algorithms.

2. A device according to Claim 1, wherein the sensors are pressure sensors.

3. A device according to Claim 1, wherein the sensors are variable capacitance sensors.

4. A device according to Claim 1, wherein the sensors are variable induction sensors.

5. A device according to Claim 1, wherein the sensors are temperature detectors.

6. A device according to any one of Claims 1 to 5, wherein the sensors supply a binary signal.

7. A device according to any one of Claims 1 to 6, wherein the sensors are arranged on a support (16).

8. A device according to any one of Claims 1 to 6, wherein the sensors are arranged on an object representative of the image to be distorted at places corresponding to each zone of local modification of the image.
